# EUROPÄISCHE PATENTANMELDUNG

(11) **EP 2 063 303 A1**
(43) Veröffentlichungstag der Anmeldung: **27.05.2009**
(21) Anmeldenummer: 08017441.0
(22) Anmeldetag: 04.10.2008
(51) Int. Cl.: G02B 7/08, G03B 3/10

(54) **Optischer Sensor**

(30) Priorität: 24.11.2007 DE 102007056643
(71) Anmelder: Leuze electronic GmbH + Co. KG, 73277 Owen/Teck (DE)
(72) Erfinder: Gold, Matthias, 72574 Bad Urach (DE); Wolf, Tilo, 73240 Wendlingen (DE); Müller, Thomas, 73119 Zell u. A. (DE)
(74) Vertreter: Ruckh, Rainer Gerhard

(57) **Zusammenfassung**

Die Erfindung betrifft einen optischen Sensor mit einer motorisch betriebenen Einrichtung (1) zur Verstellung der Position einer Anordnung von Optikelementen (4) relativ zu einem Lichtstrahlen emittierenden oder empfangenden optoelektronischen Bauelement. Die Verstellung der Anordnung der Optikelemente (4) erfolgt mittels eines Antriebs (6,7,11) mit Selbsthemmung. Weiter ist ein Positionsmesssystem (17) zur absoluten Positionsbestimmung der Anordnung der Optikelemente (4) vorgesehen, wobei in Abhängigkeit der Messwerte des Positionsmesssystems (17) die Anordnung der Optikelemente (4) mittels des Antriebs (6,7,11) verstellbar ist.

## Beschreibung

Die Erfindung betrifft einen optischen Sensor gemäß dem Oberbegriff des Anspruchs 1.

Derartige optische Sensoren weisen generell optoelektronische Bauelemente in Form von Lichtstrahlen emittierenden Sendern beziehungsweise in Form von Lichtstrahlen empfangenden Empfängern auf. Diesen optoelektronischen Bauelementen sind Optikelemente in Form von Linsen und dergleichen zugeordnet, um eine spezifische Fokussierung der Lichtstrahlen zu bewirken.

Im einfachsten Fall ist die Anordnung der Optikelemente in einer fest vorgegebenen Position relativ zum optoelektronischen Bauelement angeordnet, so dass eine bestimmte, unveränderbare Fokuslage erhalten wird.

Weiterhin sind optische Sensoren mit Fokusverstellungen bekannt. In diesem Fall wird eine Anordnung von Optikelementen relativ zu einem optoelektronischen Bauelement des optischen Sensors bewegt, um so die Fokuslage der Lichtstrahlen ändern zu können.

Ein derartiger, als Barcodelesegerät ausgebildeter optischer Sensor ist aus der DE 41 42 701 A1 bekannt. Bei diesem optischen Sensor wird über einen Elektromotor die Position einer Linse relativ zu einem Lichtstrahlen emittierenden Sender periodisch variiert, um so die Fokuslage der Lichtstrahlen periodisch zu variieren.

Diese Einrichtung variiert die Fokuslage fortlaufend, eine Einstellung der Fokuslage auf einen vorgebbaren, definierten Wert ist nicht möglich.

Weiterhin sind Kamerasysteme wie zum Beispiel Digitalkameras bekannt. Auch diese Systeme weisen Fokusverstelleinrichtungen auf, jedoch ist auch dort eine Einstellung auf eine definierte Fokuslage nicht möglich.

Der Erfindung liegt die Aufgabe zugrunde, einen optischen Sensor bereitzustellen, welcher eine Fokusverstellung mit erweiterter Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die Erfindung betrifft einen optischen Sensor mit einer motorisch betriebenen Einrichtung zur Verstellung der Position einer Anordnung von Optikelementen relativ zu einem Lichtstrahlen emittierenden oder empfangenden optoelektronischen Bauelement. Die Verstellung der Anordnung der Optikelemente erfolgt mittels eines Antriebs mit Selbsthemmung. Weiter ist ein Positionsmesssystem zur absoluten Positionsbestimmung der Anordnung der Optikelemente vorgesehen, wobei in Abhängigkeit der Messwerte des Positionsmesssystems die Anordnung der Optikelemente mittels des Antriebs verstellbar ist.

Durch das im erfindungsgemäßen optischen Sensor integrierte Positionsmesssystem kann die Absolutposition der Anordnung der Optikelemente bestimmt werden. Dadurch kann mittels des Antriebs die Anordnung der Optikelemente auf eine definierte Position relativ zu dem zugeordneten optoelektronischen Bauelement eingestellt werden, das heißt eine definierte Fokuslage von Lichtstrahlen, die vom optoelektronischen Bauelement emittiert oder empfangen werden, eingestellt werden.

Der optische Sensor kann dabei insbesondere ein bildverarbeitendes System bilden. Die Anordnung der Optikelemente bildet dann ein Objekt, das durch den Antrieb relativ zu einem optoelektronischen Bauelement in Form eines Empfängers mit einer Linearanordnung oder Matrixanordnung von Empfangselementen ausgerichtet wird.

In einer besonders vorteilhaften Ausführungsform weist der optische Sensor eine Schnittstelle auf, über welche ein Sollwert für die einzustellende Fokuslage vorgegeben wird. Im optischen Sensor wird anhand des Sollwerts die entsprechende Position der Anordnung der Optikelemente eingestellt, wobei diese Positionseinstellung durch das Positionsmesssystem kontrolliert wird, wodurch Fehleinstellungen vermieden werden. Die Fokuslage kann somit bedienerfreundlich über Softwarebefehle vorgegeben werden. Durch eine Anpassung der sensorinternen Software zur Einstellung der Fokuslage können Komponenten des optischen Sensors ausgetauscht werden, wobei innerhalb des optischen Sensors insbesondere unterschiedliche Objektive mit unterschiedlichen optischen Eigenschaften eingesetzt werden können. Der so ausgebildete optische Sensor bildet somit ein flexibel einsetzbares modulares System.

Ein weiterer wesentlicher Vorteil des erfindungsgemäßen optischen Sensors besteht darin, dass zur Positionseinstellung der Anordnung der Optikelemente ein Antrieb mit Selbsthemmung eingesetzt wird, der dafür sorgt, dass eine eingestellte Fokuslage auch bei einem Spannungsausfall im optischen Sensor erhalten bleibt.

In einer besonders vorteilhaften Ausgestaltung der Erfindung ist dabei der Antrieb mit Selbsthemmung in Form eines Reibradantriebs mit einem auf ein Reibrad wirkenden Piezomotor ausgebildet. Das Reibrad selbst ist an eine Gewindestange gekoppelt, welche die durch den Piezomotor generierte Drehbewegung des Reibrads in eine Translationsbewegung der Anordnung der Optikelemente umsetzt.

Als selbsthemmendes Element ist eine Feder vorgesehen, die eine mechanische Kraft auf den Piezomotor derart ausübt, dass auch bei einem Spannungsfall des Antriebs der Piezomotor mit einer Anpresskraft gegen das Reibrad drückt und dieses in einer definierten Position fixiert.

Durch spezielle Führungselemente in Form zweier Parallelfedern wird erreicht, dass die Translationsbewegung der Anordnung der Optikelemente in Richtung der optischen Achse des zugeordneten optoelektronischen Bauelements erfolgt, und zwar ohne dass ein Kippen oder Verdrehen der Optikelemente erfolgt. Dadurch wird erreicht, dass sich die Abbildungseigenschaften der Optikelemente bei der Fokuseinstellung nicht undefiniert ändern.

Die Erfindung wird im Folgenden anhand eines Ausführungsbeispiels und der Zeichnungen erläutert. Es zeigen:
- Figur 1:: Ausführungsbeispiel einer Fokuseinstellvorrichtung für einen optischen Sensor.
- Figur 2:: Draufsicht auf eine Codescheibe für die Einrichtung gemäß Figur 1.

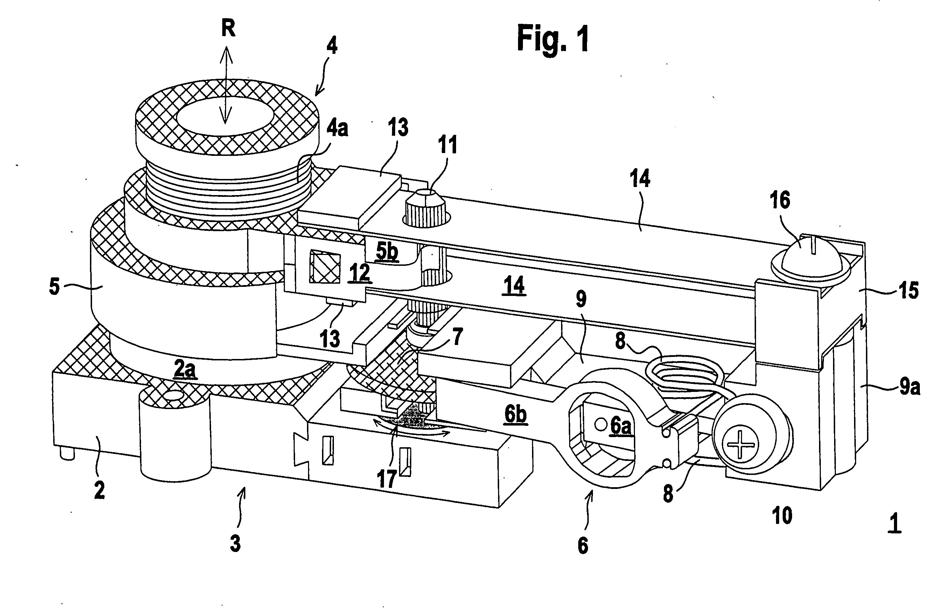

Figur 1 zeigt eine Fokuseinstellvorrichtung 1 für einen optischen Sensor.

Der optische Sensor, in welcher die Fokuseinstellvorrichtung 1 integriert ist, ist als bildverarbeitendes System ausgebildet. In einem Rahmen 2 eines Trägers 3 der ortsfest innerhalb des optischen Sensors montiert wird, ist ein nicht dargestellter Empfänger gelagert, der aus einer Matrixanordnung von Empfangselementen besteht. Der Empfänger ist von einem CCD-Sensor oder CMOS-Sensor gebildet. Der Rahmen 2 ist an der Oberseite offen, so dass die lichtempfindlichen Empfangselemente in der Öffnung des Rahmens 2 frei liegen. An die Oberseite des Rahmens 2 schließt eine hohlzylindrische Führung 2a an, die einstückig mit dem Rahmen 2 ausgebildet ist.

Dem Empfänger ist ein Objektiv zugeordnet, welches eine hohlzylindrische Aufnahme 4 aufweist, in welcher nicht dargestellte Optikelemente wie Linsen, Blenden und dergleichen gelagert sind. An der außen liegenden Mantelfläche der Aufnahme 4 ist ein Gewinde 4a vorgesehen. Das Objektiv ist in einer Halterung 5 gelagert. Hierzu wird das Gewinde 4a in eine kreiszylindrische Bohrung 5a der Halterung 5 eingeschraubt und ist dort mittels nicht dargestellter Fixiermittel fixiert. Figur 1 zeigt das in die Bohrung 5a der Halterung 5 eingeschraubte Objektiv.

Während des Betriebs des optischen Sensors werden Lichtstrahlen über das Objektiv zum Empfänger geführt. Zur Fokusverstellung wird das in der Halterung 5 gelagerte Objektiv relativ zum Empfänger verschoben. Die in Figur 1 mit R bezeichnete Richtung der Verschiebung verläuft im wesentlichen in vertikaler Richtung und damit im wesentlichen parallel zur Strahlachse der Lichtstrahlen und parallel zu der optischen Achse des Empfängers. Bei der Verschiebung ist der untere Teil der Halterung 5 an der Führung 2a des Trägers 3 geführt.

Die Positionsverstellung des Objektivs mit der Halterung 5 und damit die Fokusverstellung erfolgt motorisch. Der Antrieb zur Fokusverstellung ist als Reibradantrieb ausgebildet. Dieser umfasst einen Piezomotor 6 der in Eingriff mit einem Reibrad 7 steht. Der Piezomotor 6 weist ein Piezoelement 6a sowie ein zungenförmiges Betätigungselement 6b auf, das in Eingriff mit dem Reibrad 7 steht. Durch Schwingungen des Piezoelements 6a wird das Betätigungselement 6b in Bewegungen versetzt, durch welche das Reibrad 7 eine Drehbewegung um seine Drehachse ausführt.

Als selbsthemmendes Element ist dem Piezomotor 6 eine Feder 8 zugeordnet. Die Feder 8 übt eine mechanische Kraft auf den Piezomotor 6 auf, durch welchen bei Stillstand des Piezomotors 6 und insbesondere auch bei einem Spannungsausfall eine vorgegebene Drehposition des Reibrads 7 erhalten wird.

Der Piezomotor 6 und die Feder 8 sind an einem Ausleger 9 des Trägers 3 befestigt. Zur Befestigung der Feder 8 ist eine Schraube 10 vorgesehen.

Durch die mittels des Piezomotors 6 erzeugte Drehbewegung des Reibrads 7 wird eine mit dem Reibrad 7 verbundene Gewindestange 11 angetrieben. Die Mantelfläche ist in einer Ausnehmung in einem Adapter 5b der Halterung 5 angelegt und dort mittels einer Klammer 12 fixiert.

An dem Adapter 5b der Halterung 5 sind mittels plattenförmiger Fixiermittel 13 weiterhin erste längsseitige Enden zweier in Abstand zueinander parallel verlaufender Parallelfedern 14 befestigt. Die zweiten längsseitigen Enden der Parallelfedern 14 sind an einem Sockel 9a am längsseitigen Ende des Auslegers 9 des Trägers 3 befestigt. Dabei ist zwischen den Parallelfedern 14 ein Abstandshalter 15 gelagert, der mit den Parallelfedern 14 mittels einer Schraube 16 am Sockel 9a festgeschraubt wird.

Schließlich ist an der Unterseite des Trägers 3 eine Codescheibe 17 vorgesehen, die auf dem unteren Ende der Gewindestange 11 gelagert ist.

Zur Durchführung der Fokusverstellung wird mittels des Piezomotors 6 das Reibrad 7 gedreht, wodurch die Gewindestange 11 angetrieben wird. Durch die Ankopplung der Gewindestange 11 an die Halterung 5 wird die Drehbewegung des Reibrads 7 durch die Gewindestange 11 in eine Translationsbewegung der Halterung 5 mit dem Objektiv in der mit R bezeichneten Richtung bewirkt. Dabei sorgen die Parallelfedern 14 für eine spielfreie Bewegung der Halterung 5. Weiterhin bewirken die Parallelfedern 14, dass das Objektiv bei der Fokusverstellung nicht gedreht oder gekippt wird, so dass die Optikelemente das Objektiv in einer horizontalen Ebene während der Fokusverstellung halten. Dadurch ist gewährleistet, dass sich die Abbildungseigenschaften des Objektivs bei der Fokusverstellung nicht ändern.

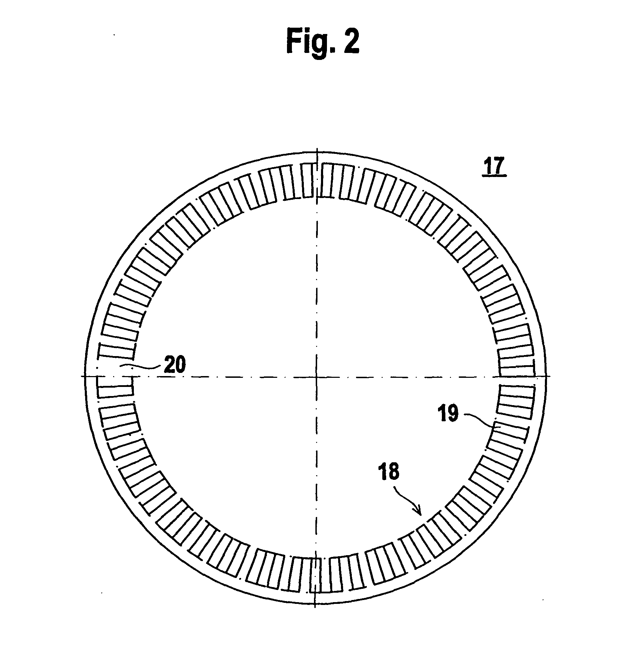

Die Codescheibe 17 ist in einer Draufsicht in Figur 2 dargestellt. Die Codescheibe 17 weist eine Spur 18 mit in Umfangsrichtung der Codescheibe 17 verlaufenden, identischen und äquidistant angeordneten Codierungen 19 auf. Weiterhin weist die Codescheibe 17 eine einzelne, von den anderen Codierungen 19 abweichende Einzelcodierung 20 auf.

Die Codierungen 19 werden mit einem nicht dargestellten Sensorelement abgetastet. Die damit generierten Signale werden in einer nicht dargestellten Auswerteeinheit ausgewertet.

Die mit der Codescheibe 17 generierten Signale liefern für sich alleine genommen lediglich Relativpositionen für die aktuellen Drehpositionen des Reibrads 7 und der Gewindestange 11.

Zur Generierung von Absolutortswerten wird in einem definierten Endanschlag des Objekts, der als mechanischer Anschlag ausgebildet sein kann oder durch eine Lichtschranke als Endschalter vorgebbar ist, die Position der Einzelcodierung 20 der Codescheibe 17 erfasst. Ausgehend von diesem Endanschlag wird dann durch den Piezomotor 6 die Gewindestange 11 in eine Drehbewegung versetzt, deren Absolutposition durch die Signale der Codescheibe 17 und die Lage der Einzelcodierung 20 ausgehend vom Endanschlag eindeutig bestimmt ist.

Alternativ kann die Codescheibe 17 auch zwei Spuren 18 mit Codierungen 19 aufweisen.

Aus den definierten geometrischen Parametern des Antriebs mit der Gewindestange 11 sowie des in der Halterung 5 gelagerten Objektivs wird in der Auswerteeinheit aus den absoluten Drehpositionen der Gewindestange 11 die Absolutposition des Objektivs errechnet und damit die Lage des Objektivs relativ zum Empfänger bestimmt.

Durch das Positionsmesssystem kann somit die Einstellung einer bestimmten Fokuslage mittels des Antriebs genau kontrolliert werden.

Der optische Sensor weist vorteilhaft eine nicht dargestellte Schnittstelle auf, die an die Auswerteeinheit angeschlossen ist.

Über die Schnittstelle kann ein Sollwert für eine einzustellende Fokuslage vorgegeben werden. Der Sollwert wird dann in der Auswerteeinheit aus den bekannten Geometriedaten der Fokuseinstellvorrichtung 1 in die Absolutposition des Objektivs umgerechnet. Durch Betätigen des Antriebs in Abhängigkeit der vom Positionsmesssystem generierten aktuellen Absolutpositionen des Objektivs wird dann dieses so lange verfahren, bis die dem Sollwert entsprechende Fokuslage erhalten wird.

Auch nach einem Austausch von Komponenten der Fokuseinstellvorrichtung 1 kann über die Schnittstelle die Fokuslage in identischer Weise eingegeben werden. Die geänderten Geometrien der neuen Komponenten werden in der Auswertesoftware der Auswerteeinheit berücksichtigt, so dass sich entsprechend geänderte Umrechnungsfaktoren der Fokuslage in Positionswerte des Objektivs ergeben.

### Bezugszeichenliste

- (1): Fokuseinstellvorrichtung
- (2): Rahmen
- (2a): Führung
- (3): Träger
- (4): Aufnahme
- (4a): Gewinde
- (5): Halterung
- (5a): Bohrung
- (5b): Adapter
- (6): Piezomotor
- (6a): Piezoelement
- (6b): Betätigungselement
- (7): Reibrad
- (8): Feder
- (9): Ausleger
- (9a): Sockel
- (10): Schraube
- (11): Gewindestange
- (12): Klammer
- (13): Fixiermittel
- (14): Parallelfedern
- (15): Abstandshalter
- (16): Schraube
- (17): Codescheibe
- (18): Spur
- (19): Codierung
- (20): Einzelcodierung

## Patentansprüche

1. Optischer Sensor mit einer motorisch betriebenen Einrichtung zur Verstellung der Position einer Anordnung von Optikelementen relativ zu einem Lichtstrahlen emittierenden oder empfangenden optoelektronischen Bauelement, **dadurch gekennzeichnet, dass** die Verstellung der Anordnung der Optikelemente mittels eines Antriebs mit Selbsthemmung erfolgt, und dass ein Positionsmesssystem zur absoluten Positionsbestimmung der Anordnung der Optikelemente vorgesehen ist, wobei in Abhängigkeit der Messwerte des Positionsmesssystems die Anordnung der Optikelemente mittels des Antriebs verstellbar ist.

2. Optischer Sensor nach Anspruch 1, **dadurch gekennzeichnet, dass** die Anordnung der Optikelemente ein Objektiv bildet, welches einem optoelektronischen Bauelement in Form eines Empfängers zugeordnet ist.

3. Optischer Sensor nach Anspruch 2, **dadurch gekennzeichnet, dass** dieser ein bildverarbeitendes System ist, und dass der Empfänger eine matrix- oder zeilenförmige Anordnung von Empfangselementen aufweist.

4. Optischer Sensor nach einem der Ansprüche 1 bis 3, **dadurch gekennzeichnet, dass** der Antrieb von einem Reibradantrieb mit einem auf ein Reibrad (7) wirkenden Piezomotor (6) gebildet ist.

5. Optischer Sensor nach Anspruch 4, **dadurch gekennzeichnet, dass** der Antrieb als selbsthemmendes Element eine auf den Piezomotor (6) wirkende Feder (8) aufweist.

6. Optischer Sensor nach einem der Ansprüche 5 oder 6, **dadurch gekennzeichnet, dass** mittels einer Gewindestange (11) die Drehbewegung des Reibrads (7) in eine Translationsbewegung der Anordnung der Optikelemente in Richtung der Strahlachse der Lichtstrahlen umgesetzt wird.

7. Optischer Sensor nach Anspruch 6, **dadurch gekennzeichnet, dass** als Führungselemente zur spielfreien Führung der Anordnung der Optikelemente zwei Parallelfedern (14) vorgesehen sind.

8. Optischer Sensor nach einem der Ansprüche 4 bis 7, **dadurch gekennzeichnet, dass** das Positionsmesssystem eine Codescheibe (17) mit wenigstens einer in Umfangsrichtung umlaufenden Spur (18) zur Bestimmung der Drehposition des Reibrads (7) aufweist.

9. Optischer Sensor nach Anspruch 8, **dadurch gekennzeichnet, dass** zur Bestimmung von Absolutpositionen die Codescheibe (17) zwei Code-Spuren (18) aufweist.

10. Optischer Sensor nach Anspruch 8, **dadurch gekennzeichnet, dass** zur Bestimmung von Absolutpositionen eine Einzelcodierung (20) auf der Codescheibe (17) vorgesehen ist, deren Lage in einem definierten Endanschlag des Antriebs erfasst wird.

11. Optischer Sensor nach einem der Ansprüche 1 bis 10, **dadurch gekennzeichnet, dass** dieser eine Schnittstelle aufweist, über welche ein Sollwert für die Fokuslage der Lichtstrahlen vorgebbar ist.

12. Optischer Sensor nach Anspruch 11, **dadurch gekennzeichnet, dass** die Position der Anordnung der Optikelemente zur Einstellung der Fokuslage auf den Sollwert selbsttätig einstellbar ist.
